# EUROPEAN PATENT SPECIFICATION

(11) **EP 3 868 632 B1**
(45) Date of publication and mention of the grant of the patent: **20.09.2023**
(21) Application number: 21157742.4
(22) Date of filing: 18.02.2021
(51) Int. Cl.: B62B 3/06, B62B 5/00, B66F 3/35

(54) **TRANSFER CARRIAGE**
TRANSFERWAGEN
CHARIOT DE TRANSFERT

(30) Priority: 21.02.2020 FI 20205173
(43) Date of publication of application: 25.08.2021
(73) Proprietor: Mäkelä Alu Oy, 62830 Luoma-aho (FI)
(72) Inventor: Mäkelä, Petri, 62830 Luoma-aho (FI); Kytölä, Ari, 62830 Luoma-aho (FI); Korkea-aho, Mika, 62830 Luoma-aho (FI)
(74) Representative: Kolster Oy Ab

(56) References cited:
- DE-C1- 3 638 506
- DE-U1-202014 006 562
- IT-A1- RM20 080 539
- US-A- 3 019 930

## Description

### Background of the invention

The invention relates to a transfer carriage comprising side-by-side parallel longitudinal transfer units arranged to be movable and each of the transfer units comprises an outer beam and an inner beam which is arranged inside the outer beam.

IT RM20080539 discloses a pneumatic lifting and handling device comprising wheels. The device comprises a first box that opens upwards. The first box has a first flat base and side edges demarcating the base. A second box, which opens downwards and has a second flat base and side edges demarcating the base, is placed inside the first box. There is an inflatable element inside the space between the first and second flat base. A pin inside a vertical slit limits the vertical movement of the boxes in respect of each other.

DE 202014006562 discloses a conveyor unit for conveying loaded or unloaded charge carriers.

DE 3638506 discloses a chassis for a movable grandstand.

US 3019930 discloses a fork lift unit for lifting and moving heavy objects.

### Brief description of the invention

It is an object of the invention to develop a new type of transfer carriage. The object of the invention is achieved with a transfer carriage which is characterised by what is disclosed in the independent claim. Preferred embodiments of the invention are disclosed in the dependent claims.

The transfer carriage according to the invention is used to load containers, in particular. A transfer carriage is an excellent tool in particular for loading containers that open at their ends, in which case a load needs to be loaded into a narrow and long space. Naturally, a transfer carriage may be used for loading from a side. A transfer carriage may also be used in connection with loading something else than containers, such as for loading a lorry or a trailer.

An advantage of the inventive transfer carriage is that it may be easily moved under a load to be loaded or unloaded, and away. Loading and unloading become easier and faster with the transfer carriage, whereby major cost savings are achieved. Since the transfer unit of a transfer carriage has successive members, adjustable in the vertical direction by means of a medium, the adjustment may be efficiently carried out with a small amount of the medium, whereby a relatively low-capacity source for the medium may be used.

A further advantage of the transfer carriage is that there is no need to carry it along with a container, but the loading and unloading ends may have their own transfer carriages. This way the entire volume of a container may be utilized to pack items being transported. Alternatively, the transfer carriage may be carried with the load.

In this description, words indicating directions are used. The transfer carriage is described in the position where it is when used on a horizontal surface. The longitudinal direction of the transfer carriage is the longitudinal direction of the outer and inner beam. A vertical direction refers to a surface orthogonal to the horizontal surface.

The transfer carriage comprises side-by-side parallel longitudinal transfer units arranged to be movable and each comprising an outer beam and an inner beam which is arranged inside the outer beam. The transfer carriage is arranged movable by means of wheels, rolls, or similar. The wheels or rolls are usually in pairs so that there is one on both sides of the transfer carriage. There is a plurality of wheels or rolls in the longitudinal direction of the transfer carriage, as needed.

One of the beams is a rectangular hollow beam, open at the top, and the other of the beams is a rectangular hollow beam, open at the bottom. In other words, the inner beam may be open at the top when the outer beam is open at the bottom, and the inner beam may be open at the bottom when the outer beam is open at the top. The open rectangular beam may be a so-called U-beam. The inner and outer beam are opposite each other so that an encased space is formed between them, where the required actuators may be placed.

The outer beam and inner beam are connected by a limiter allowing vertical movement. In other words, the outer and inner beam may only move in the vertical direction in relation to each other. The movement limiter may be so arranged that the vertical walls of the beams are joined with an axle that exist through an opening in a side wall of the inner beam and a vertical groove in a side wall of the outer beam. There may be a plurality of movement limiters in the longitudinal direction of the beams.

The transfer unit also features a channel for a medium. The channel for a medium may be integrated as part of the beam. The channel for a medium is primarily intended for compressed air, but a hydraulic fluid may also be applied.

In the space between the outer beam and inner beam, successive members have been installed, which are adjustable in the vertical direction by means of a medium and connected to the channel for the medium. Such members include, for example, air bellows that ascend or descend in the vertical direction according to whether more compressed air is led to the channel for a medium or whether it is reduced from the channel for a medium. Air bellows usually have 1, 2, or 3 bellows.

An air bellows usually has a flange on both the upper and lower side. A first flange is attached to a beam surface over it, and a second flange is attached to a beam surface below it. The bellows itself is a ring-shaped cushion which may be made of fibre-reinforced rubber.

A plurality of transfer units may be joined side-by-side so that the transfer units are arranged in parallel and interconnected through openings at the end of the transfer units, by using a rod.

The interconnected transfer units are easy to move by pushing or pulling with a forklift, for example. It is also feasible to connect a plurality of transfer units successively.

The air needed for the air bellows may be obtained from the compressor of the transfer means present during loading, in other words, a separate source is not necessarily needed for compressed air but the source for compressed air available at any one time may be utilised.

The transfer carriage functions so that it is pushed, as lowered down, below the piece to be lifted. Next, compressed air is hooked up, resulting in that the members, such as air bellows, adjustable in the vertical direction raise the transfer carriage to the upper position. After this, the piece is easy to move due to the wheels that the transfers carriage has.

Once the object being moved is in place, compressed air is withdrawn from the vertically adjustable members, after which the transfer carriage may be removed.

The use of the transfer carriage for loading a container facilitates easy and fast loading in connection with long pieces, such as aluminium profiles, in particular. The long pieces are first placed on a suitably-sized load platform such as a loading pallet intended for transferring long pieces, which has the required space under it for the transfer carriage. The pieces are tied to the load platform and one or more transfer units are pushed under the load platform. The transfer units are connected together through the openings at the ends of the transfer units with a rod. The rod may also connect to the load platform under the pieces, if the load platform is provided with suitable openings. Following this, the load platform is raised by introducing air into the vertically-adjustable members of the transfer carriage, such as air bellows. Now, the load platform loaded with long pieces may be pushed inside a container. When the load platform is in place, the transfer carriage is lowered and removed from below the load platform.

### Brief description of the drawings

The invention will now be described in closer detail in connection with the preferred embodiments, with reference to the accompanying drawings in which:
Figure 1 shows a transfer unit seen from an end of the beams;
Figure 2 shows an opened transfer unit from below;
Figure 3 is a side view or the inner beam;
Figure 4 shows a transfer unit.

### Detailed description of the invention

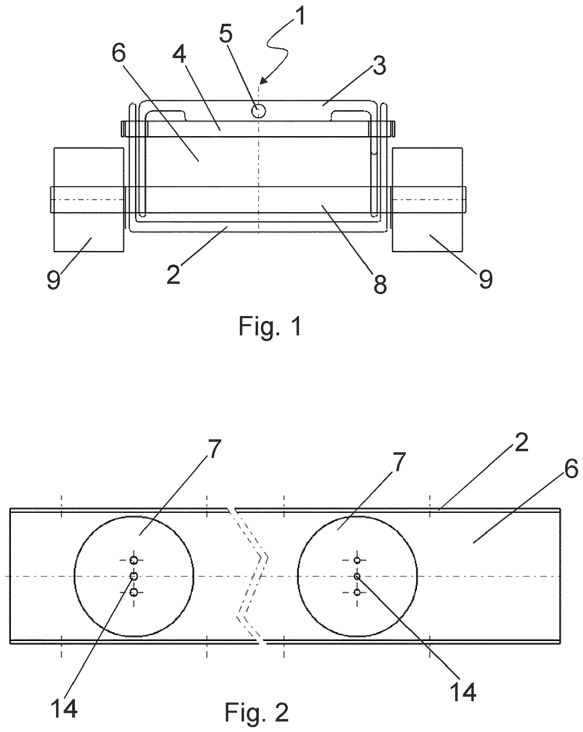

Figure 1 shows a transfer unit 1 as seen from the ends of an outer beam 2 and inner beam 3. Between the outer beam 2 and inner beam 3, a space 6 is formed in which vertically adjustable members 7 (shown in Figure 2) are installed.

The transfer unit 1 has wheels or rolls 9 interconnected by an axle 8. Furthermore, the transfers unit has a channel 5 for a medium integrated into the inner beam 3.

Figure 2 shows an opened transfer unit 1 from above. In the space 6 formed between the outer beam 2 and inner beam 3, successive vertically adjustable members 7 have been installed. The vertically adjustable members 7 may be, for example, air bellows that ascend or descend in the vertical direction according to whether more compressed air is led to the channel for a medium or whether it is reduced from the channel for a medium. Air bellows usually have 1, 2, or 3 bellows. At the top of the air bellows 7 there is a feed opening 14 for compressed air, to be connected to the channel 5 for a medium.

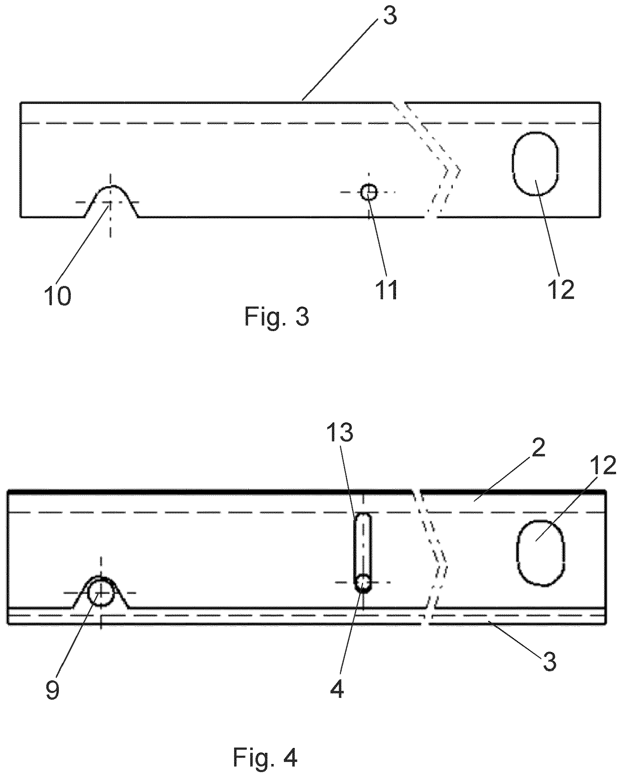

Figure 3 is a side view of the inner beam 3. The inner beam 3 has a space 10 for wheels or rolls 9, a lead-through 11 for a limiter 4 that allows vertical movement, and an opening 12 for joining the transfer units 1.

Figure 4 is a side view of the transfer unit 1. Through the lead-through 11 in the inner beam 3 and through the groove 13 in the outer beam 2, the limiter 4 allowing vertical movement has been installed. The outer beam 2 has an opening 12 at the same place as in the inner beam 3 for interconnecting the transfer units 1.

Those skilled in the art will find it obvious that, as technology advances, the basic idea of the invention may be implemented in many different ways. The invention and its embodiments are thus not restricted to the examples described above but may vary within the scope of the claims.

## Claims

1. A transfer carriage comprising side-by-side parallel longitudinal transfer units (1) arranged to be movable and each of the transfer units (1) comprises an outer beam (2) and an inner beam (3) which is arranged at least partly inside the outer beam (2), wherein
- the first of the beams (2, 3) is a rectangular hollow beam, open at the top, and the second of the beams is a rectangular hollow beam (2, 3), open at the bottom,
- the outer beam (2) and inner beam (3) are connected by a limiter (4) allowing vertical movement,
- each transfer unit (1) has a channel (5) for a medium, to which are connected successive members (7) adjustable in the vertical direction by means of the medium and installed in a space (6) formed between the outer (2) and inner beam (3),
- each transfer unit (1) comprises an opening (12) at the end of the transfer unit (1), and
- the transfer units (1) are interconnected at one end through the openings (12) by a rod.

2. A transfer carriage as claimed in claim 1, **characterised in that** the first beam is the outer beam (2), which is a rectangular hollow beam open at the top, and the second beam is the inner beam (3), which is a rectangular hollow beam open at the bottom.

3. A transfer carriage as claimed in claim 1 or 2, **characterised in that** the successive vertically adjustable members (7) are air bellows.

4. A transfer carriage as claimed in any one of the preceding claims, **characterised in that** the channel (5) for a medium is integrated into the outer (2) or inner (3) beam.

## Patentansprüche

1. Transferwagen mit nebeneinander angeordneten, parallelen, längsgerichteten Transfereinheiten (1), die dafür eingerichtet sind, beweglich zu sein, und jede der Transfereinheiten (1) umfasst einen äußeren Träger (2) und einen inneren Träger (3), der zumindest teilweise innerhalb des äußeren Trägers (2) angeordnet ist, wobei
- der erste der Träger (2, 3) ein rechteckiger, oben offener Hohlträger ist und der zweite der Träger ein rechteckiger, unten offener Hohlträger (2, 3) ist,
- der äußere Träger (2) und der innere Träger (3) durch einen Begrenzer (4) verbunden sind, der eine vertikale Bewegung ermöglicht,
- jede Transfereinheit (1) einen Kanal (5) für ein Medium aufweist, mit dem aufeinanderfolgende Elemente (7) verbunden sind, die mittels des Mediums in vertikaler Richtung verstellbar sind und in einem zwischen dem äußeren (2) und dem inneren Träger (3) gebildeten Raum (6) installiert sind,
- jede Transfereinheit (1) eine Öffnung (12) am Ende der Transfereinheit (1) aufweist, und
- die Transfereinheiten (1) an einem Ende durch die Öffnungen (12) hindurch durch eine Stange miteinander verbunden sind.

2. Transferwagen nach Anspruch 1, **dadurch gekennzeichnet , dass** der erste Träger der äußere Träger (2) ist, der ein rechteckiger, oben offener Hohlträger ist, und der zweite Träger der innere Träger (3) ist, der ein rechteckiger, unten offener Hohlträger ist.

3. Transferwagen nach Anspruch 1 oder 2, **dadurch gekennzeichnet, dass** die aufeinanderfolgenden vertikal verstellbaren Elemente (7) Luftbälge sind.

4. Transferwagen nach einem der vorstehenden Ansprüche, **dadurch gekennzeichnet, dass** der Kanal (5) für ein Medium in den äußeren (2) oder inneren (3) Träger integriert ist.

## Revendications

1. Chariot de transfert comprenant des unités de transfert (1) longitudinales et parallèles côte-à-côte agencées de façon à pouvoir être déplacées et chacune des unités de transfert (1) comprend une barre extérieure (2) et une barre intérieure (3) qui est agencée au moins partiellement à l'intérieur de la barre extérieure (2), dans lequel
- la première des barres (2, 3) est une barre creuse rectangulaire, ouverte en haut, et la seconde des barres est une barre creuse rectangulaire (2, 3), ouverte en bas,
- les barre extérieure (2) et barre intérieure (3) sont reliées par un limiteur (4) permettant un mouvement vertical,
- chaque unité de transfert (1) présente un canal (5) pour un milieu, auquel sont reliés des éléments (7) successifs réglables dans la direction verticale au moyen du milieu et installés dans un espace (6) formé entre la barre extérieure (2) et intérieure (3),
- chaque unité de transfert (1) comprend une ouverture (12) à l'extrémité de l'unité de transfert (1), et
- les unités de transfert (1) sont reliées entre elles à une extrémité via les ouvertures (12) par une tige.

2. Chariot de transfert selon la revendication 1, **caractérisé en ce que** la première barre est la barre extérieure (2), qui est une barre creuse rectangulaire ouverte en haut, et la seconde barre est la barre intérieure (3), qui est une barre creuse rectangulaire ouverte en bas.

3. Chariot de transfert selon la revendication 1 ou 2, **caractérisé en ce que** les éléments (7) successifs réglables à la verticale sont des soufflets d'air.

4. Chariot de transfert selon l'une quelconque des revendications précédentes, **caractérisé en ce que** le canal (5) pour un milieu est intégré jusque dans la barre extérieure (2) ou intérieure (3).
